(19) Europäisches Patentamt
European Patent Office
Office européen des brevets

(11) **EP 4 317 100 A1**

(12) **EUROPEAN PATENT APPLICATION**
published in accordance with Art. 153(4) EPC

(43) Date of publication:
**07.02.2024 Bulletin 2024/06**

(21) Application number: **22779502.8**

(22) Date of filing: **03.02.2022**

(51) International Patent Classification (IPC):
**C03C 27/06** (2006.01)   **E06B 3/677** (2006.01)

(52) Cooperative Patent Classification (CPC):
**C03C 27/06; E06B 3/677;** Y02A 30/249;
Y02B 80/22

(86) International application number:
**PCT/JP2022/004212**

(87) International publication number:
**WO 2022/209273 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021056151**

(71) Applicant: **Nippon Sheet Glass Company, Limited
Minato-ku
Tokyo 108-6321 (JP)**

(72) Inventors:
• **MIKI, Atsushi
Tokyo 108-6321 (JP)**
• **NAKAZAWA,Tatsuhiro
Tokyo 108-6321 (JP)**

(74) Representative: **HGF
HGF Europe LLP
Neumarkter Straße 18
81673 München (DE)**

(54) **VACUUM MULTILAYERED GLASS PANEL**

(57) A depressurized multilayered glass panel includes: a pair of opposing glass plates 1A, 1B; a plurality of space holding members arranged in a gap formed between the pair of glass plates 1A, 1B; a peripheral edge sealing material 11 configured to seal a gap of a peripheral edge 3 of the pair of glass plates 1A, 1B; and a suction hole sealing material 15 configured to seal a suction hole 4 penetrating through the front and the back in one of the pair of glass plates 1A, 1B in a state where the gap is depressurized via the suction hole 4, in which the center of the suction hole 4 is provided at a position away from an edge 3A of the pair of glass plates 1A, 1B by 10 mm or more and 100 mm or less and the upper limit of the weight of the suction hole sealing material 15 is calculated according to a mathematical equation.

Fig.6

**Description**

Technical Field

The present invention relates to a depressurized multilayered glass panel.

Background Art

A depressurized multilayered glass panel includes a pair of opposing glass plates, in which a gap is provided between the pair of glass plates and the gap is brought into a depressurization state (e.g., Patent Literature 1). The peripheral edge of the pair of glass plates is provided with a peripheral edge sealing material joining the pair of glass plates over the entire periphery to hermetically seal the gap. One glass plate of the pair of glass plates is formed with a suction hole penetrating through the front and the back in the one glass plate and sucking the air in the gap. The suction hole and the periphery around the suction hole are covered with a suction hole sealing material in the state where the gap is depressurized via the suction hole, so that the suction hole is sealed.

In the depressurized multilayered glass panel described in Patent Literature 1, the suction hole is arranged at a position close to a corner portion of the peripheral edge of the pair of glass plates.

Citation List

Patent Literature

Patent Literature 1: International Publication No. WO 2019/093323

Summary of Invention

Technical Problem

In the depressurized multilayered glass panel described in Patent Literature 1, a 300°C molten solder (sealing material), for example, is sometimes charged as the suction hole sealing material in the sealing of the suction hole. In this case, when the suction hole is arranged near the edge of the glass plate, the heat of the molten solder charged into the suction hole is transferred to the peripheral edge sealing material (e.g., solder) sealing a peripheral edge portion of the glass plate, raising the temperature of the peripheral edge sealing material. The melting point of the solder is usually around 200°C, which poses a risk of a decrease in the adhesion strength of the pair of glass plates when the temperature of a peripheral edge portion sealing material rises to reach 200°C or more. On the other hand, when the suction hole is arranged at a position distant from the edge of the glass plate, the temperature rise of the peripheral edge sealing material is suppressed. However, the suction hole is positioned closer to the center of the glass plate, which poses a risk that the suction hole damages the appearance of the depressurized multilayered glass panel. The temperature rise of the peripheral edge sealing material is also affected by the weight of the suction hole sealing material besides the distance between the suction hole and the edge of the glass plate. More specifically, the heat quantity of the suction hole sealing material charged into the suction hole increases with an increase in the weight of the suction hole sealing material, and therefore the temperature of the peripheral edge sealing material is likely to rise.

Thus, a depressurized multilayered glass panel capable of preventing the decrease in the adhesion strength of the peripheral edge sealing material by the suction hole sealing material sealing the suction hole has been desired.

Solution to Problem

A feature configuration of a depressurized multilayered glass panel according to the present invention includes: a pair of opposing glass plates; a plurality of space holding members arranged in a gap formed between the pair of glass plates; a peripheral edge sealing material configured to seal the gap of the peripheral edge of the pair of glass plates; and a suction hole sealing material configured to seal a suction hole penetrating through the front and the back in one of the pair of glass plates in a state where the gap is depressurized via the suction hole, in which the center of the suction hole is provided at a position away from the edge of the pair of glass plates by 10 mm or more and 100 mm or less and the upper limit of the weight of the suction hole sealing material is Wmax calculated according to the following equation,

[Math. 1]

$$\mathrm{Wmax} = \mathrm{K} \times \ln(\mathrm{A/B}) \times \mathrm{H} \times \mathrm{C} \times \mathrm{D}/(\mathrm{N} \times \Delta \mathrm{T}),$$

in which

Wmax (g) is the upper limit weight of the suction hole sealing material,
K is a correction coefficient,
A (mm) is the distance from the center of the suction hole to the edge of the glass plate,
B (mm) is the radius of the suction hole,
H (mm) is the height of the suction hole,
C (W/mm·K) is the thermal conductivity of the glass plate,
D (°C) is a temperature difference permissible between the inner diameter side of the suction hole and the edge of the glass plate when the suction hole sealing material is charged into the suction hole,
N (J/g·K) is the specific heat of the suction hole sealing material, and
ΔT (°C) is a temperature difference between the suction hole sealing material and the peripheral edge sealing material when the suction hole sealing material is charged into the suction hole.

In the depressurized multilayered glass panel, the suction hole is preferably arranged close to the peripheral edge of the pair of glass plates in terms of appearance. In the case, however, with an increase in the weight of the suction hole sealing material, the heat quantity transferred from the suction hole sealing material to the peripheral edge sealing material via the glass plate increases when the molten suction hole sealing material is charged into the suction hole in a manufacturing process of the depressurized multilayered glass panel. Therefore, the peripheral edge sealing material subjected to the heat of the suction hole sealing material increases in temperature and partially melts in some cases. This reduces the adhesion strength of the pair of glass plates by the peripheral edge sealing material. Therefore, in this configuration, the upper limit of the weight of the suction hole sealing material is prescribed based on a mathematical equation including the distance from the center of the suction hole to the edge of the glass plate. Thus, in the depressurized multilayered glass panel, the weight of a suction sealant charged into the suction hole of the glass plate can be properly set and the temperature rise of the peripheral edge sealing material by the suction hole sealing material can be suppressed in the manufacturing of the depressurized multilayered glass panel. As a result, the depressurized multilayered glass panel can prevent the decrease in the adhesion strength of the peripheral edge sealing material and can maintain the adhesion strength of the pair of glass plates by the peripheral edge sealing material.

Another feature configuration is such that the suction hole sealing material has a weight of 0.05 g or more and 5.00 g or less.

When the suction hole sealing material has a weight of less than 0.05 g, the suction hole cannot be properly sealed unless the size of the suction hole is reduced. When the suction hole is small, a suction step of the gap of the pair of glass plates takes longer time. This poses a possibility that the depressurization state of the gap of the depressurized multilayered glass panel is insufficient, so that the workability in manufacturing the depressurized multilayered glass panel also decreases. On the other hand, when the weight of the suction hole sealing material exceeds 5.00 g, the vicinity of the suction hole of the glass plate is excessively heated by the suction hole sealing material, which sharpy raises the temperature of the glass plate. Therefore, the glass plate of which temperature rises is subjected to a high-temperature thermal shock to be broken in some cases. Accordingly, the weight of the suction hole sealing material is preferably 0.05 g or more and 5.00 g or less.

Another feature configuration is such that the suction hole sealing material has a width in the plate surface direction of the pair of glass plates of 5 mm or more and 25 mm or less.

In the depressurized multilayered glass panel, the width of the suction hole sealing material is preferably small in terms of appearance. In this configuration, the width of the suction hole sealing material is 5 mm or more and 25 mm or less, and therefore the adjustment of the diameter of the suction hole and the width of the suction hole sealing material according to the size of the depressurized multilayered glass panel can make the suction hole sealing material less visible. When the width of the suction hole sealing material is 5 mm or more and 25 mm or less, the transfer of the heat of the suction hole sealing material to the peripheral edge sealing material via the glass plate is suppressed and the adhesion strength of the pair of glass plates by the peripheral edge sealing material can be maintained.

Another feature configuration is such that the peripheral edge sealing material has the width in the plate surface direction of the pair of glass plates of 3 mm or more and 12 mm or less.

When the width of the peripheral edge sealing material is 3 mm or more and 12 mm or less as in this configuration, the peripheral edge of the pair of glass plates can be properly sealed in the depressurized multilayered glass panel.

Another feature configuration is such that the peripheral edge sealing material has a melting point of 200°C or more.

When the melting point of the peripheral edge sealing material is 200°C or more as in this configuration, the melting point of the suction hole sealing material can be set to 200°C or more, and therefore the degree of freedom of an applicable suction sealing material increases.

Another feature configuration is such that the pair of glass plates is formed in a rectangular shape, and the suction hole is arranged in a corner portion close to two sides of the one of the pair of glass plates.

The arrangement of the suction hole in the corner portion close to the two sides of the rectangular glass plate as in this configuration can make the suction hole less visible in the depressurized multilayered glass panel.

Another feature configuration is such that the pair of glass plates is formed in a rectangular shape and that the suction hole is arranged close to the vicinity of the center of one side of the one of the pair of glass plates.

The arrangement of the suction hole close to the vicinity of the center of one side of the rectangular glass plate as in this configuration can make the suction hole less visible in the depressurized multilayered glass panel. Further, the arrangement of the suction hole sealing material charged into the suction hole close to only one side of the glass plate makes it possible to reduce a region of the peripheral edge sealing material of which temperature rises due to the heat of the suction hole sealing material. This can suppress the decrease in the adhesion strength of the peripheral edge sealing material in the glass plate formed with the suction hole.

Another feature configuration is such that the suction hole sealing material is in contact with the plate surface of the other one of the pair of glass plates.

Due to the fact that the suction hole sealing material contacts the plate surface of the other one of the pair of glass plates as in this configuration, the suction hole sealing material is arranged over the pair of glass plates. Thus, the sealing state of the suction hole can be firmly held by the suction hole sealing material.

Brief Description of Drawings

FIG. 1 is a partially cut-out perspective view of a depressurized multilayered glass panel;
FIG. 2 is a longitudinal cross-sectional view of the vicinity of a suction hole of the depressurized multilayered glass panel,
FIG. 3 is a flowchart illustrating a method for manufacturing the depressurized multilayered glass panel;
FIG. 4 is a cross-sectional view illustrating a sealing device;
FIG. 5 is a cross-sectional view illustrating a sealing operation;
FIG. 6 is an explanatory view of a test model;
FIG. 7 is a graph illustrating the relationship between the distance from the edge to the suction hole and the temperature rise quantity of a peripheral edge sealing material;
FIG. 8 is a graph illustrating the relationship between the weight of a suction hole sealing material and the maximum temperature of the peripheral edge sealing material in the distance from the edge to the suction hole of 10 mm and 15 mm;
FIG. 9 is a graph illustrating the relationship between the distance from the edge to the suction hole and the temperature rise quantity of the peripheral edge sealing material;
FIG. 10 is a graph illustrating the relationship between the distance from the edge to the suction hole and the weight of the suction hole sealing material; and
FIG. 11 is a plan view of a depressurized multilayered glass panel of a second embodiment.

Description of Embodiments

Hereinafter, embodiments of a depressurized multilayered glass panel according to the present invention are described based on the drawings. In the embodiments, a vacuum double glass panel is described as an example of the depressurized multilayered glass panel. However, the embodiments are not limited to the following embodiments, and can be variously altered without departing from the gist thereof.

[First embodiment]

Hereinafter, a depressurized multilayered glass panel according to a first embodiment is described with reference to the drawings.

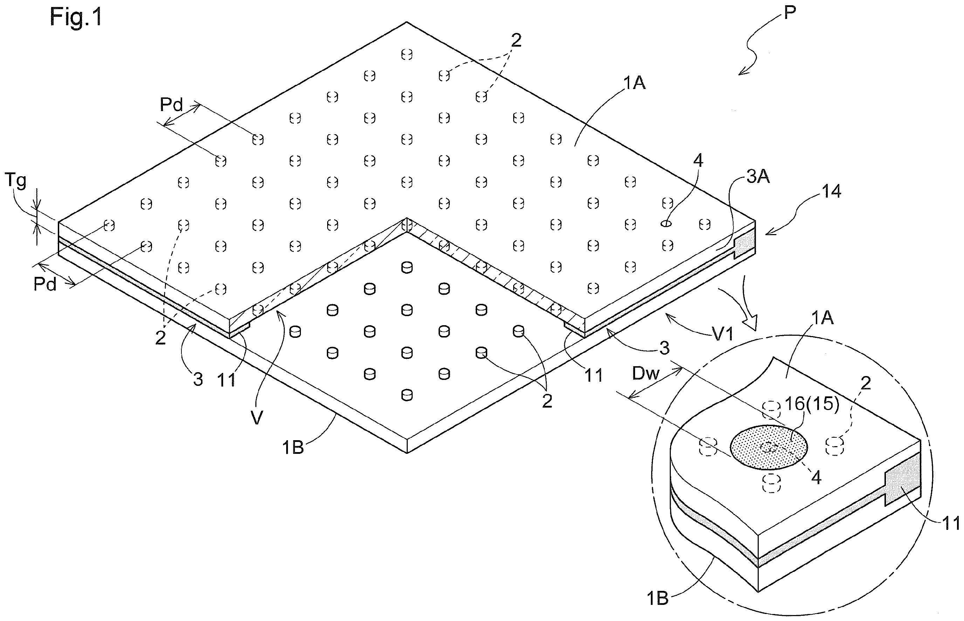

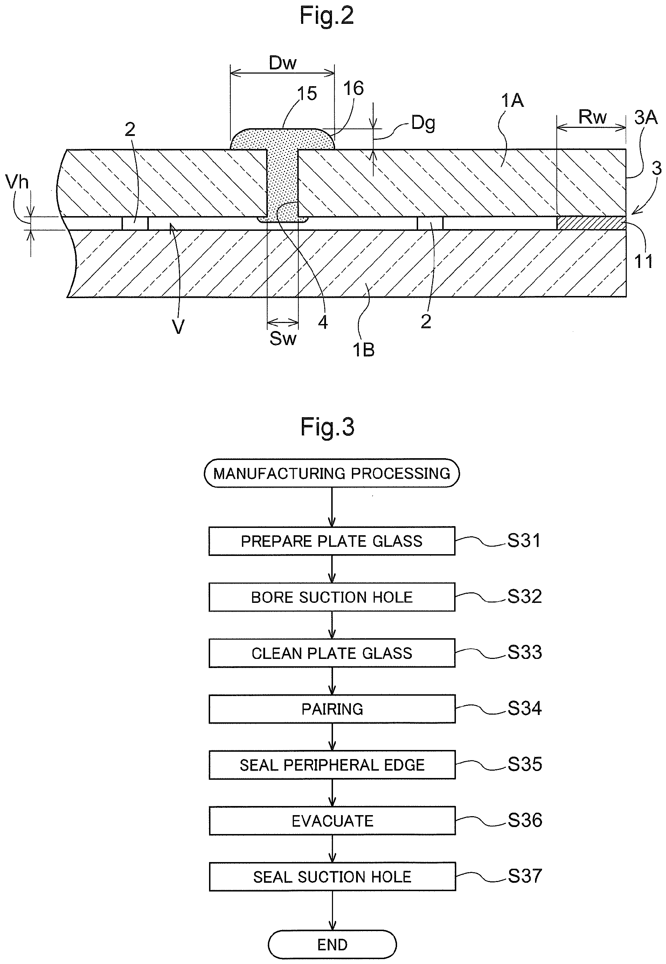

As illustrated in FIGS. 1 and 2, a depressurized multilayered glass panel (hereinafter referred to as a glass panel) P includes a pair of opposing glass plates 1A, 1B and a plurality of spacers 2 (one example of the space holding member) arranged between the pair of glass plates 1A, 1B. The plurality of spacers 2 is arranged in a gap V formed between the pair of glass plates 1A, 1B. The plurality of spacers 2 is arranged at a constant interval on the plate surfaces of the pair of glass plates 1A, 1B. The glass panel P includes a peripheral edge sealing material 11 sealing the gap V in a peripheral edge 3 of the pair of glass plates 1A, 1B. The glass panel P also has a suction hole 4 penetrating through the front and the back of one glass plate 1A of the pair of glass plates 1A, 1B. The suction hole 4 is sealed with a suction hole sealing material 15 covering the suction hole 4 and the peripheral edge of the suction hole 4. The suction hole sealing material 15 seals the suction hole 4 in a state where the gap V is depressurized via the suction hole 4 in one of the pair of glass plates 1A, 1B.

In the glass panel P, the two glass plates 1A, 1B each are transparent float glass. The gap V formed between the two glass plates 1A, 1B is depressurized to 1.33 Pa ($1.0 \times 10^{-2}$ Torr) or less. The gap V is depressurized by discharging the air thereinside to the outside via the suction hole 4 and sealed with the peripheral edge sealing material 11 and the suction hole sealing material 15 to maintain the above-described depressurization state.

The spacer 2 has a cylindrical shape with a diameter of 0.3 to 1.0 mm and a height of 30 $\mu$m to 1.0 mm. The spacer 2 is formed of a material that does not buckle even when a compressive stress resulting from the atmospheric pressure acting on the glass plate 1A, 1B is loaded, e.g., a material with a compressive strength of $4.9 \times 10^8$ Pa ($5 \times 10^3$ kgf/cm2) or more, preferably stainless steel (SUS304) or the like.

The glass panel P is manufactured based on the flowchart illustrated in FIG. 3. First, two glass blanks (not illustrated) with a predetermined thickness formed of float glass each are cut into a predetermined dimension, e.g., 1200 mm $\times$ 900 mm, to prepare the glass plates 1A, 1B having the same shape and the same size (Step S31). Next, the suction hole 4 is bored by a drill or like into the glass plate 1A in the vicinity of any one of the four corners of the glass plate 1A (Step S32: boring step).

Next, the pair of glass plates 1A, 1B is cleaned using at least one of the methods of pure water brush cleaning, a liquid cleaning method, and optical cleaning in a space where the air pollution state can be chemically or physically controlled, such as a clean room or a chemical clean room (Step S33: cleaning step). In this liquid cleaning method, pure water, deionized water, or the like is used. The cleaning liquid contains an alkaline detergent or ozone water, for example. The cleaning liquid may also contain abrasives. As the abrasives, fine particles mainly containing cerium oxide as a main ingredient are used, for example.

Next, the plurality of spacers 2 is arranged in a matrix shape at a constant pitch Pd on the cleaned glass plate 1B where the suction hole 4 is not boded, and the cleaned glass plate 1A is superposed, thereby performing pairing of the glass plates 1A, 1B (Step S34).

Next, the pair of glass plates 1A, 1B subjected to the pairing is approximately horizontally held, and a peripheral edge portion V1 of the pair of glass plates 1A, 1B is sealed using the peripheral edge sealing material 11 with a dissolution temperature of 250°C or less (Step S35: peripheral edge sealing step).

In the peripheral edge sealing step (Step S35), a moving mechanism (not illustrated) is moved at a constant speed on a rail member (not illustrated) along the peripheral edge portion V1 of the gap V of the pair of glass plates 1A, 1B, and an introduction plate (not illustrated) is inserted into the gap V from a groove part 14 of the pair of glass plates 1A, 1B. Thus, the peripheral edge sealing material 11 enters the entire peripheral edge portion V1 of the pair of glass plates 1A, 1B via the introduction plate, so that the peripheral edge portion V1 of the pair of glass plates 1A, 1B is hermetically sealed with the peripheral edge sealing material 11. The groove part 14 as used herein is provided in a corner portion of the glass panel P and is an area where a corner portion on the gap V side of the pair of glass plates 1A, 1B is chamfered such that the introduction plate can be easily inserted into the gap V.

In the next Step S36, the evacuation of discharging the gas in the gap V to the outside is performed to reduce the pressure in the gap V to 1.33 Pa or less. Specifically, an exhaust cup is attached to the principal surface on the atmospheric side of the glass plate 1A to cover the suction hole 4 in the vicinity of the suction hole 4, and the gas in the gap V is suctioned by a rotary pump or a turbomolecular pump, which is not illustrated, connected to this exhaust cup.

However, the pump used in Step S36 is not limited to the rotary pump or the turbomolecular pump mentioned above, and any pump may be acceptable insofar as it can be connected to the exhaust cup and is capable of sucking the gas.

Next, the suction hole sealing material 15 covering the suction hole 4 is dropped, and the glass surface in the vicinity of the suction hole 4 and the suction hole sealing material 15 are bonded to each other for sealing the suction hole 4 (Step S37). This tightly closes the gap V formed between the pair of glass plates 1A, 1B.

Among the above-described steps, the steps from the cleaning of the principal surface of the pair of glass plates 1A, 1B (Step S33) to the bonding of the glass surface in the vicinity of the suction hole 4 and the suction hole sealing material 15 for sealing (Step S37) each are carried out in a depressurization space (autoclave), the pressure of which can be controlled to the air pressure.

The peripheral edge sealing material 11 has a melting point of 200°C or more. When the melting point of the peripheral edge sealing material 11 is 200°C or more, the melting point of the suction hole sealing material 15 can be set to 200°C or more, which increases the degree of freedom of the applicable suction hole sealing material 15. As the peripheral edge sealing material 11, solder with a melting point of 250°C or less, for example, such as solder with a composition of 91.2Sn-8.8Zn (eutectic point temperature: 198°C) added with Ti, is used to seal the peripheral edge 3 of the pair of glass plates 1A, 1B. However, the peripheral edge sealing material 11 (solder) is not limited thereto, and the peripheral edge 3 of the pair of glass plates 1A, 1B may be sealed using a sealant which is a metal material containing at least one material selected from the group consisting of Sn, Cu, In, Bi, Zn, Pb, Sb, Ga, and Ag and has a melting point of 250°C or less.

The peripheral edge sealing material 11 may also contain, in place of Ti or in addition to Ti, at least one material selected from the group consisting of Al, Cr, and Si. This can enhance the adhesiveness between the peripheral edge sealing material 11 and glass components of the pair of glass plates 1A, 1B.

The suction hole sealing material 15 has a melting point of 200°C or more. In this embodiment, the suction hole 4 is sealed using, as the suction hole sealing material 15, solder with a melting point of 250°C or less, e.g., solder with a composition of 91.2Sn-8.8Zn (eutectic point temperature: 198°C) added with Ti. However, the suction hole sealing material 15 (solder) is not limited thereto, and the suction hole 4 may be sealed using a sealant which is a metal material containing at least one material selected from the group consisting of Sn, Cu, In, Bi, Zn, Pb, Sb, Ga, and Ag and has a melting point 250°C or less. When Sn is selected, the amount may be 90% or more. In the case of Sn added with Cu, the Cu amount needs to be 0.1% or less.

The suction hole sealing material 15 may also contain, in place of Ti or in addition to Ti, at least one material selected from the group consisting of Al, Cr, and Si. For the suction hole sealing material 15, solder containing a component different from the component of the peripheral edge sealing material 11 may be used. The addition of Ti (titanium) to the suction hole sealing material 15 or the peripheral edge sealing material 11 enhances the close contact property with the glass plates 1A, 1B.

In this embodiment, the pressure of the gap V is reduced to 1.33 Pa or less, but the present invention is not limited thereto, and the pressure of the gap V may be reduced until the gap V is substantially evacuated. This can further enhance the thermal insulation performance of the glass panel P.

In this embodiment, the lower limit of a thickness Tg of the pair of glass plates 1A, 1B is 0.3 mm or more. The lower limit of the thickness Tg is preferably 0.5 mm or more and more preferably 1 mm or more. When the thickness Tg of the pair of glass plates 1A, 1B is small, the heat storage quantity of the glass itself is small, and therefore the heat dissipation quantity into the air per unit time increases in the peripheral edge sealing, so that the peripheral edge sealing material 11 is likely to be cooled. Thus, the solidification of the molten peripheral edge sealing material 11 can be accelerated. However, when the glass plates 1A, 1B excessively decrease in thickness (less than 1 mm), the rigidity of the glass plates 1A, 1B decreases, and therefore the deformation quantity of the glass plates 1A, 1B due to external forces of the same magnitude increases. Therefore, tensile stress occurring near the surface on the side of a gap portion of the suction hole 4 increases in the glass panel P.

The upper limit of the thickness Tg of the pair of glass plates 1A, 1B is 15 mm or less. The upper limit of the thickness Tg is preferably 12 mm or less and more preferably 10 mm or less. The use of the thick glass plates 1A, 1B increases the rigidity of the glass plates 1A, 1B, and therefore the deformation quantity of the glass plates 1A, 1B due to external forces of the same magnitude decreases. Therefore, the tensile stress occurring near the surface on the side of the gap portion of the suction hole 4 decreases in the glass panel P, which enhances the long-term durability. On the other hand, when the thickness Tg of the glass plates 1A, 1B is excessively large (exceeding 15 mm), the inflow amount of the suction hole sealing material 15 into the suction hole 4 decreases in the suction hole sealing. Therefore, the protrusion of the suction hole sealing material 15 of the surface on the side of the gap portion of the suction hole 4 decreases in size, making it difficult to reduce the tensile stresses occurring near the surface on the side of the gap portion of the suction hole 4.

The pair of glass plates 1A, 1B is float glass, but is not limited thereto. For the pair of glass plates 1A, 1B, various kinds of glass, such as figured glass, frosted glass with a light diffusion function by surface treatment, wired glass, wired glass plate, tempered glass, double tempered glass, low reflection glass, high transmission glass plate, ceramic glass plate, and special glass with heat and UV absorption functions, or combinations thereof, or the like, for example, can be selected as appropriate for use according to the intended use as described above. Further, soda silicate glass, soda lime glass, borosilicate glass, aluminosilicate glass, various kinds of crystallized glass, and the like are usable also for the composition of the pair of glass plates 1A, 1B.

In this embodiment, the groove part 14 is formed by chamfering a corner portion on the gap V side of the glass plates 1A, 1B in a planar shape, but is not limited thereto. The groove part 14 can be provided in the glass plates 1A, 1B by selecting any form as appropriate, e.g., chamfered in a curved shape, insofar as the form allows easy insertion of the introduction plate.

A pitch Pd of the spacers 2 is 5 mm or more and 100 mm or less, preferably 5 mm or more and 80 mm or less, and more preferably 5 mm or more and 60 mm or less.

The spacer 2 is formed of stainless steel, but is not limited thereto. The spacer 2 may be formed of those having high rigidity, e.g., metals, such as Inconel, iron, aluminum, tungsten, nickel, chromium, and titanium, alloys of carbon steel, chromium steel, nickel steel, nickel chromium steel, manganese steel, chromium manganese steel, chromium molybdenum steel, silicon steel, brass, solder, and duralumin, ceramic or glass, and the like. The spacer 2 is also not limited to the cylindrical shape and may also have various shapes, such as a rectangular shape or a spherical shape.

A height Vh of the gap V is 30 $\mu$m to 1 mm. However, the height is substantially the same as the height of the spacers 2.

For the gap V, an evaporable getter may be used to adsorb gas molecules in the gap V or a non-evaporable getter adsorbing and removing gas molecules by being heated and activated may be used, or the non-evaporable getter and the evaporable getter may be used in combination. In the gap V, getter materials (adsorbents) and adsorbent storage holes may be provided in two or more places.

In this embodiment, the peripheral edge sealing material 11 was formed using, but not limited to, a metal introduction apparatus. The peripheral edge sealing material 11 may be formed using any one of the following bonding methods of an anodic bonding method, an ultrasonic bonding method, a multi-stage bonding method, a laser bonding method, and a crimp bonding method. This can enhance the attachment property of the peripheral edge sealing material 11 to the pair of glass plates 1A, 1B. The peripheral edge sealing material 11 may be a material other than metal materials.

A width Rw of the peripheral edge sealing material 11 as viewed in the thickness direction with respect to the plane of the glass panel P is 3 mm or more and 12 mm or less. The width Rw smaller than 3 mm makes it difficult to hold the sealing of the gap V of the glass panel P. The width Rw exceeding 12 mm increases the heat quantity transferred from one glass plate to the other glass plate through the peripheral edge sealing material 11, which reduces the insulation properties of the glass panel P. Specifically, when the glass plate 1A is set as the outdoor side and the glass plate 1B is set as the indoor side in the glass panel P illustrated in FIG. 2, the heat on the outdoor side is transferred from the glass plate 1A to the glass plate 1B via the wide peripheral edge sealing material 11, which reduces the insulation properties of the glass panel P. For the width Rw of the peripheral edge sealing material 11, the width Rw is more preferably 3 mm or more and 5 mm or less. In this case, in addition to the fact that the sealing of the gap V of the glass panel P can be held, the heat transfer quantity by the peripheral edge sealing material 11 can be further reduced.

In this embodiment, a part where the suction hole sealing material 15 after sealing protrudes from the surface on the atmospheric side of the glass plate 1A is defined as a protrusion portion 16. A diameter Dw of the protrusion portion 16 is 5 mm or more and 25 mm. More specifically, the suction hole sealing material 15 has a width in the plate surface direction of the pair of glass plates 1A, 1B of 5 mm or more and 25 mm or less. The diameter Dw is more preferably 5 mm or more and 15 mm. However, the diameter Dw of the protrusion portion 16 is larger than a suction hole diameter Sw described below in any case. A thickness Dg of the protrusion portion 16 is 0.1 mm or more and 20 mm or less and preferably 0.1 mm or more and 10 mm or less.

In this embodiment, the suction hole diameter Sw is 1 mm or more and 10 mm or less. The suction hole diameter Sw is preferably 2 mm or more and 5 mm or less. In the case of tempered glass, the suction hole diameter Sw is desirably larger than the glass thickness and 10 mm or less. This is so that the air is passed through the suction hole 4 in air-quench tempering.

An edge portion of at least one of an upper portion and at least a lower portion of the suction hole 4 may be formed in a curved shape or chamfered (the edge portion may be provided with a minute surface).

In a sealed portion of the suction hole 4 with the suction hole sealing material 15, the close contact property of the protrusion portion 16 formed around the suction hole 4 on the surface on the atmospheric side of the one glass plate 1A with the surface on the atmospheric side of the one glass plate 1A is important. The protrusion portion 16 sufficiently adheres to the one glass plate 1A when the metallic luster of the suction hole sealing material 15 is sufficiently observed when viewed from the back side of the one glass plate 1A, and the depressurization state in the gap V is maintained for a long time. However, when the adhesion of the protrusion portion 16 is insufficient, external forces, such as wind pressure and pressure in wipe-cleaning, act on the glass plate 1A. Further, due to a warping phenomenon caused by a temperature difference between the front and the back of the glass plate 1A due to solar radiation, a temperature difference between the outside and the inside, or the like, the protrusion portion 16 of the suction hole sealing material 15 to the glass plate 1A is peeled off.

As the main ingredient of the suction hole sealing material 15, Sn is 72% to 99.9%, and any one of ingredients of Zn, Al, Si, and Ti is contained and the lead content is less than 0.1% in terms of percent by weight. The suction hole sealing material 15 may be a material other than metal materials.

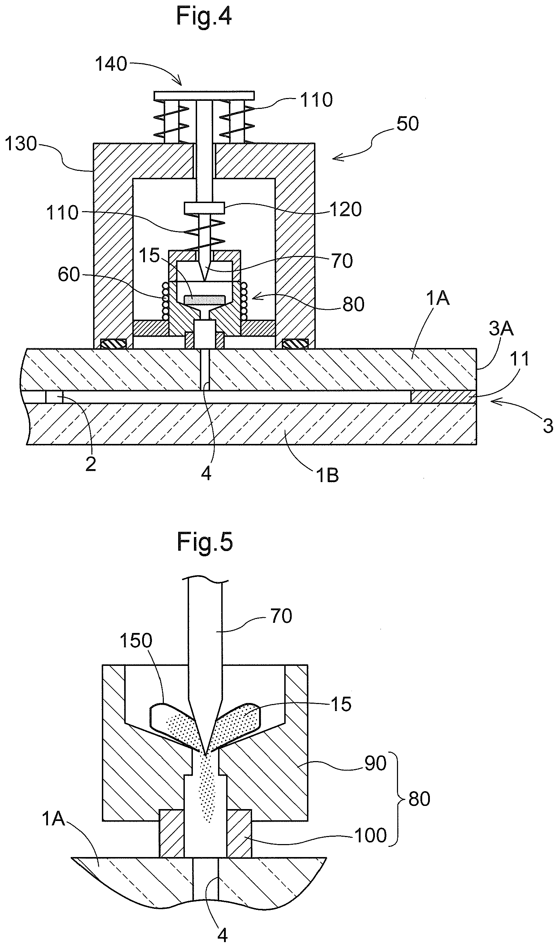

A sealing device 50 for sealing the suction hole 4 with the suction hole sealing material 15 is described based on FIGS. 4 and 5. The sealing device 50 has a heating section 60, a sharp tip member 70, and a molten metal guiding section 80. The heating section 60 heats the suction hole sealing material 15 in a solid state to its melting point. The sharp tip member 70 has a push-in pin shape that can be pierced into the surface of the suction hole sealing material 15, the corners of which are rounded due to surface tension by being heated and melted in the heating section 60. The molten metal guiding section 80 guides the molten metal flowing out of a pierced hole of the surface of the suction hole sealing material 15 formed by the sharp tip member 70 to the suction hole 4.

As illustrated in FIG. 5, the molten metal guiding section 80 is provided with a funnel-shaped metal receiving tool 90 capable of receiving the suction hole sealing material 15. The receiving tool 90 is configured to be heatable by an electric heating wire wound around its periphery. The molten metal guiding section 80 is further provided with a supply outlet 100 guiding the molten metal to the suction hole 4 in a lower part of the receiving tool 90. In the sealing device 50, the sharp tip member 70 is arranged above the receiving tool 90 via a compression spring 110. The sealing device 50 is provided with an operation mechanism 120 capable of vertically piercing the molten suction hole sealing material 15 in a lower part by pushing the pin tip of the sharp tip member 70 downward.

The sealing device 50 further has a cup 130 closely contactable with the glass plate 1A to surround the suction hole 4 and formed such that the heating section 60 and the molten metal guiding section 80 can be stored inside the cup 130. The cup 130 is further provided with an air intake section (not illustrated) capable of depressurizing the inner space of the cup 130 and a pin push-in operation device 140 capable of operating the operation mechanism 120 from the outside of the cup 130 with the inside of the cup 130 in an airtight state.

In the sealing device 50, the suction hole sealing material 15 heated and melted by the heating section 60 becomes a liquid mass having substantially rounded corners due to surface tension. Even when an oxide film 150 is formed on the surface of the suction hole sealing material 15, for example, like the thin skin of an egg, the surface is pierced by the sharp tip member 70, so that a hole is formed in a pierced portion of the oxide film 150 and the molten metal mainly flow out from the pierced portion (see FIG. 5). The flowing-out molten metal is guided to the suction hole 4 by the molten metal guiding section 80, and therefore the mixing of the metal oxide in the suction hole 4 is easily prevented. Accordingly, the suction hole sealing material 15 is bonded to the glass in a state where the metal oxide is not mixed in the suction hole 4 and the glass surface around the suction hole 4, and the airtightness of the gap V can be ensured.

In the sealing of the suction hole 4, the suction hole sealing material 15 (e.g., "solder") of about 300°C is charged into the suction hole 4 under the condition of 195°C, for example. The suction hole 4 is away from an edge (end surface) 3A of the glass plate 1A by 50 mm, for example. The temperature of the peripheral edge sealing material 11 increases with a decrease in the distance between the suction hole 4 and the edge 3A of the glass plate 1A. For the peripheral edge sealing material 11, the same "solder" as that of the suction hole sealing material 15 is used in some cases, which poses a risk that, when the temperature of the peripheral edge sealing material 11 reaches a temperature equal to or higher than the melting point (e.g., 200°C), the peripheral edge sealing material 11 partially melts. Thus, the following test was carried out to evaluate the influence when the distance of 50 mm from the edge 3A of the glass plate 1A is reduced and the influence of the weight of the suction hole sealing material 15.

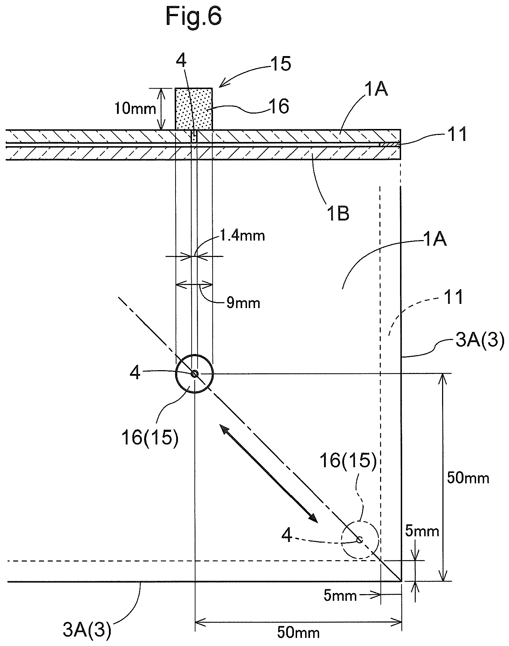

FIG. 6 illustrates a part of a depressurized multilayered glass panel used for the test and the dimension of the depressurized multilayered glass panel. The pair of glass plates 1A, 1B each is float glass with a plate thickness of 3.1 (mm). The suction hole 4 is formed in one of the pair of glass plates 1A, 1B. The peripheral edge sealing material 11 and the suction hole sealing material 15 are both Sn-Zn alloy solders with a melting point of 200°C, a density of 0.0073 (g/mm$^3$), and a specific heat of 243,000 (J/g·K). As illustrated in FIG. 6, the diameter of the suction hole 4 was set to 1.4 (mm) and the peripheral edge sealing material 11 was arranged in the peripheral edge 3 of the pair of glass plates 1A, 1B and between both of the pair of glass plates 1A, 1B with a dimension of 5 (mm) in width and 0.2 (mm) in thickness. The suction hole sealing material 15 had the weight of 4.63 (g), and was charged into the suction hole 4 and arranged in a region of 9 (mm) in diameter and 10 (mm) in height on the upper surface of the glass plate 1A.

[Test 1]

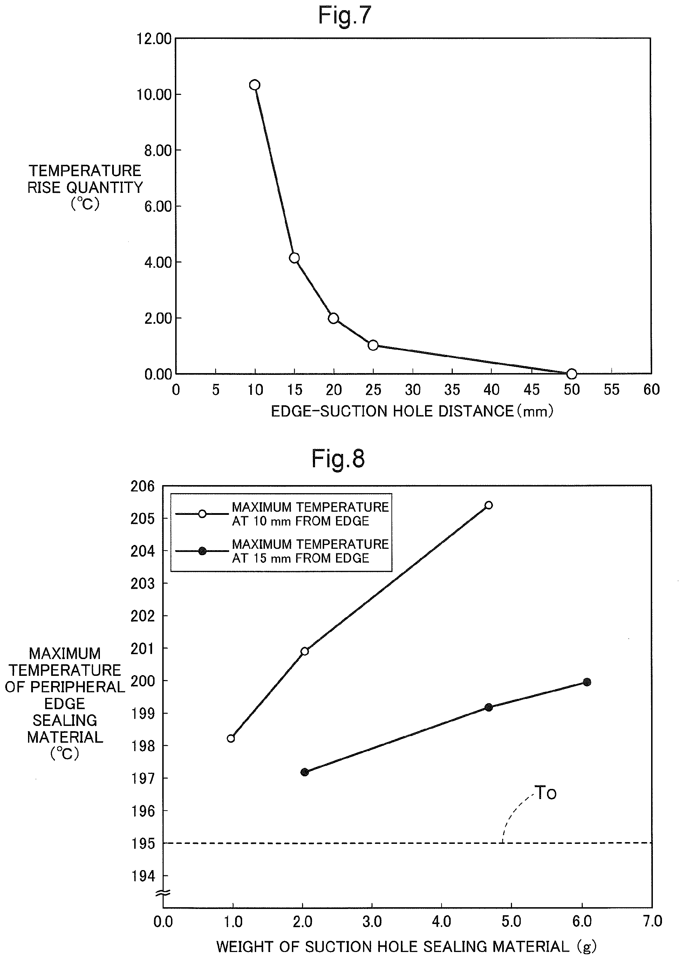

The temperature rise of the peripheral edge sealing material 11 when the suction hole sealing material 15 was charged into the suction hole 4 to seal the suction hole 4 was measured. The distance from the edge 3A of the glass plate 1A to the center of the suction hole 4 (hereafter abbreviated to as "edge distance") was set to 10 (mm), 15 (mm), 20 (mm), 25 (mm), 50 (mm) in Test Examples 1 to 5, respectively. The charging of the suction hole sealing material 15 into the suction hole 4 was carried out in an environmental condition of 195°C, and the temperature rise of the peripheral edge sealing material 11 at that time was measured. The test results of Test 1 are illustrated in Table 1 and FIG. 7.

[Table 1]

| | Edge-Suction hole distance [mm] | Peripheral edge sealing material | | |
|---|---|---|---|---|
| | | Maximum temperature [°C] | Temperature rise quantity [°C] | Maximum temperature arrival time [S] |
| Test Example 1 | 10 | 205.4 | 10.4 | 69 |
| Test Example 2 | 15 | 1992 | 4.2 | 130 |
| Test Example 2 | 20 | 197.0 | 2.0 | 192 |

(continued)

| | Edge-Suction hole distance [mm] | Peri pheral edge sealing material | | |
| --- | --- | --- | --- | --- |
| | | Maximum temperature [°C] | Temperature rise quantity [°C] | Maximum temperature arrival time [S] |
| Test Example 4 | 25 | 196.1 | 1.1 | 256 |
| Test Example 5 | 50 | 195.1 | 0.1 | 592 |

As illustrated in Table 1 and FIG. 7, the maximum temperature of the peripheral edge sealing material 11 varied from 195.1°C to 205.4°C in Test Examples 1 to 5. Among Test Examples 1 to 5, Test Example 1 (edge distance: 10 mm) had the temperature rise quantity of 10.4°C, which exceeded 5°C, and, Test Examples 2 to 5 all had the temperature rise quantity of less than 5°C.

[Test Example 2]

Subsequently, the edge distances were specified to 10 (mm) and 15 (mm), and the temperature rise of the peripheral edge sealing material 11 was measured in the environmental condition of 195°C by varying the weight of the suction hole sealing material 15 in each edge distance. When the edge distance was 10 (mm), test samples 1 to 3 were used. When the edge distance was 15 (mm), test samples 2 to 4 were used. The weight of the suction hole sealing material 15 in each of test samples 1 to 4 is as illustrated in Table 2 below. The test results of Test 2 are illustrated in Table 2 and FIG. 8.

[Table 2]

| | Weight of suction hole sealing material [g] | Edge-Suction hole distance: 10 mm Peripheral edge sealing material | | Edge-Suction hole distance: 15 mm Peripheral edge sealing material | |
| --- | --- | --- | --- | --- | --- |
| | | Maximum temperature [°C] | Temperature rise quantity [°C] | Maximum temperature [°C] | Temperature rise quantity [°C] |
| Test sample 1 | 0.961 | 198.2 | 3.2 | - | - |
| Test sample 2 | 2.027 | 200.9 | 5.9 | 197.2 | 2.2 |
| Test sample 3 | 4.670 | 205.4 | 10.4 | 1992 | 4.2 |
| Test sample 4 | 6.061 | - | - | 200.0 | 5.0 |

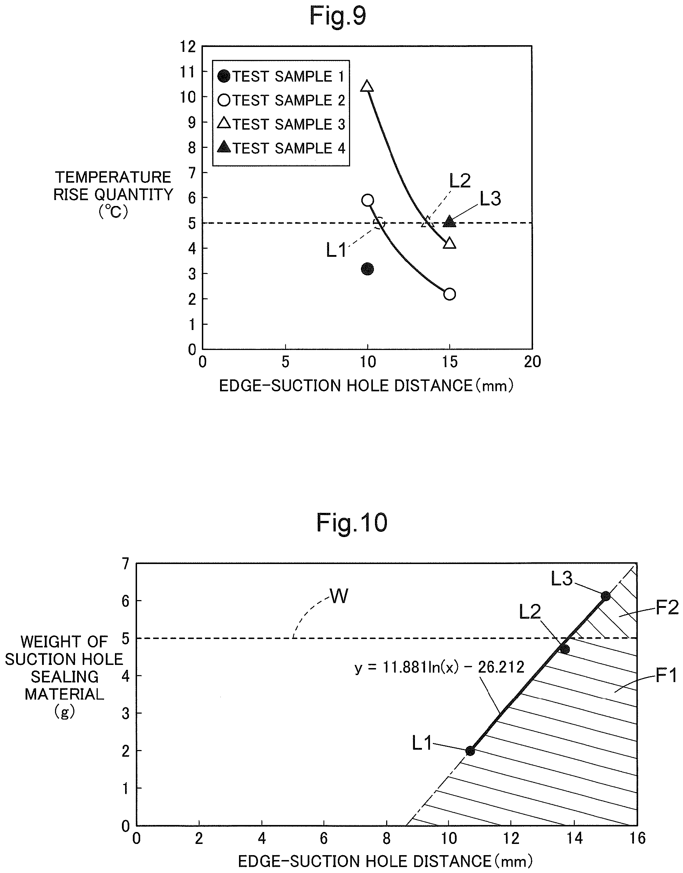

As illustrated in Table 2 and FIG. 8, when the edge distance was 10 (mm), the maximum temperature of the peripheral edge sealing material 11 increased from 198.2°C to 205.4°C with an increase in the weight of the suction hole sealing material 15 from about 1.0 g to about 4.6 g. When the edge distance was 15 (mm), the maximum temperature of the peripheral edge sealing material 11 increased from 197.2°C to 200.0°C with an increase in the weight of the suction hole sealing material 15 from about 2.0 g to about 6.1 g. In FIG. 8, the initial temperature (ambient temperature) of the peripheral edge sealing material 11, 195°C, is represented by "To".
Based on the test results of Test 2 (Table 2 and FIG. 8), the relationship between the edge distance and the temperature rise quantity of the peripheral edge sealing material 11 in each of Test samples 1 to 4 was graphed (see FIG. 9). From FIG. 9, the edge distance where the temperature rise quantity was 5°C was assumed or confirmed in Test sample 2, Test sample 3, Test sample 4.

The three edge distances L1 (test sample 2), L2 (test sample 3), L3 (test sample 4) where the temperature rise quantity is 5°C illustrated in FIG. 9 and the weight of the suction hole sealing material 15 in each edge distance are plotted in a graph illustrated in FIG. 10, and the three points (L1, L2, L3) are connected with an approximate straight line. The approximate straight line represents the upper limit weight of the suction hole sealing material 15 in each edge distance.

The upper limit weight of the suction hole sealing material 15 in each edge distance based on the approximate straight line above is discussed below. By recognizing the relationship between the suction hole 4 and the edge 3A as a cylindrical shape, a heat transfer quantity E (W) to the peripheral edge sealing material 11 via the glass plate 1A by the suction hole sealing material 15 can be calculated by Equation (1) below based on a calculation equation for the heat transfer quantity based on a temperature difference between the inner diameter side and the outer diameter side of the cylinder.

$$E = 2\pi \times C \times D \times H / \ln(A/B) \cdots (1)$$

In Equation (1), A (mm) is the outer radius (i.e., the distance from the center of the suction hole 4 to the edge 3A). B (mm) is the radius of the suction hole 4. H (mm) is the height of the suction hole 4 (i.e., the thickness of the glass plate 1A). C (W/mmK) is the thermal conductivity of the glass plate 1A. D (°C) is a temperature difference permissible between the inner diameter side and the outer diameter side (edge 3A) of the suction hole 4 when the suction hole sealing material 15 was charged into the suction hole 4. In Tests 1 and 2, D = (300 - 200) = 100 (°C) was given.

To the peripheral edge sealing material 11 arranged on one side of the glass plate 1A, the heat transfer quantity E above is partially transferred. Therefore, by setting the heat transfer quantity to the peripheral edge sealing material 11 as E1 and a correction coefficient as "K1", the heat transfer quantity E1 can be calculated by Equation (2) below.

$$E1 = K1 \times 2\pi \times C \times D \times H / \ln(A/B) \cdots (2)$$

On the other hand, a heat quantity E2 usable for the temperature rise of the peripheral edge sealing material 11 in the suction hole sealing material 15 is derived by Equation (3) below.

$$E2 = N \times \Delta T \times W1 \cdots (3)$$

In Equation (3), N (J/g·K) is the specific heat of the suction hole sealing material 15. $\Delta T$ (°C) is a temperature difference between the suction hole sealing material 15 and the peripheral edge sealing material 11 when the suction hole sealing material 15 was charged into the suction hole 4. W1 (kg) is the weight of the suction hole sealing material 15. In the suction hole sealing material 15 used in Tests 1 and 2, N = 243,000 (J/g·K) and $\Delta T = (300 - 195) = 105$ (°C) were established.

Based on Equation (1) above, the heat transfer quantities E, E1 decrease with an increase in ln(A/B) approximately corresponding to the distance from the edge 3A to the suction hole 4 (edge distance). More specifically, the heat transfer quantities E, E1 are inversely proportional to the edge distance. On the other hand, in view of the fact that the heat transfer quantity transferred to the peripheral edge sealing material 11 decreases with an increase in the edge distance, the heat quantity E2 which is the generation source of the heat transfer quantities E, E1 needs to increase to maintain the heat transfer quantities E, E1 with an increase in the edge distance. More specifically, the heat quantity E2 can be increased in proportion to the edge distance. Based on the test results of Tests 1 and 2, it can be understood that the weight of the suction hole sealing material 15 can also be increased in proportion to the edge distance. Based on the above, a permissible heat quantity E3 according to the edge distance can be calculated by Equation (4) below using a correction coefficient "K2" and "Wmax" as the upper limit weight of the suction hole sealing material 15.

$$E3 = K2 \times E1 \times (\ln(A/B))2 = N \times \Delta T \times Wmax \cdots (4)$$

By substituting the right side of Equation (2) above into "E1" in Equation (4) above and using the new correction coefficient "K", the upper limit weight (Wmax) of the suction hole sealing material 15 can be represented by Mathematical Equation 1.

[Math. 1]

$$\mathrm{Wmax} = \mathrm{K} \times \ln(\mathrm{A/B}) \times \mathrm{H} \times \mathrm{C} \times \mathrm{D/(N} \times \Delta \mathrm{T)},$$

in which

Wmax (g) is the upper limit weight of the suction hole sealing material,
K is the correction coefficient,
A (mm) is the distance from the center of the suction hole to the edge of the glass plate,
B (mm) is the radius of the suction hole,
H (mm) is the height of the suction hole,
C (W/mm·K) is the thermal conductivity of the glass plate.
D (°C) is the temperature difference permissible between the inner diameter side of the suction hole and the edge of the glass plate when the suction hole sealing material was charged into the suction hole,
N (J/g·K) is the specific heat of the suction hole sealing material, and
ΔT (°C) is the temperature difference between the suction hole sealing material and the peripheral edge sealing material when the suction hole sealing material was charged into the suction hole.

Referring to Mathematical Equation 1 above, and the physical properties, the dimension, and the like of the materials actually used in Test 2, although "A" corresponding to the edge distance is a variable, all other values are predetermined, and therefore, by using a new correction coefficient "K3", the weight Wmax of the suction hole sealing material 15 can be represented by Equation (5) below.

$$\mathrm{Wmax} = \mathrm{K3} \times (\ln \mathrm{A} - \ln \mathrm{B}) \cdots (5)$$

In Equation (5) above, "B" corresponding to the radius of the suction hole 4 is also a predetermined value, and therefore the approximate straight line based on L1, L2, L3 illustrated in FIG. 10 can be represented by "y = 11.881 × ln(x) - 26.212".

Based on the above, the weight of the suction hole sealing material 15 where the temperature rise of the peripheral edge sealing material 11 is 5°C or less corresponding to the edge distance is included in regions F1, F2 on the right side of the approximate straight line in FIG. 10, and the upper limit can be set based on Equation (4) above. Thus, the weight of the suction hole sealing material 15 charged into the suction hole 4 of the glass plate 1A can be properly set in the glass panel P, and the temperature rise of the peripheral edge sealing material 11 by the suction hole sealing material 15 in the manufacturing of the glass panel P can be suppressed. As a result, the glass panel P can prevent the decrease in the adhesion strength of the peripheral edge sealing material 11 and maintain the adhesion strength of the pair of glass plates 1A, 1B by the peripheral edge sealing material 11. As described above, the regions F1, F2 are the weight ranges of the suction hole sealing material 15 where the temperature rise quantity is 5°C or less in the predetermined edge distances. However, for the region F2 beyond a boundary line W of 5 (g), it cannot be said that the weight of the suction hole sealing material 15 falls within a proper range for the following reasons.

The weight W of the suction hole sealing material 15 is preferably 0.05 g or more and 5.00 g or less. When the weight W of the suction hole sealing material 15 is less than 0.05 g, the suction hole 4 cannot be properly performed unless the size of the smaller suction hole 4 is reduced, and, when the suction hole 4 is small, a suction step of the gap V takes longer time. This poses a possibility that the depressurization state of the gap V becomes insufficient in the glass panel P, which also reduces the workability in manufacturing the glass panel P. On the other hand, when the weight W exceeds 5.00 g, the periphery of the suction hole 4 of the glass plate 1A is excessively heated by the suction hole sealing material 15, which sharply raises the temperature of the glass plate 1A. Specifically, the suction hole sealing material 15 charged at 300°C has a temperature difference of 105°C from the glass plate 1A with a temperature of 195°C. Therefore, the heat quantity proportional to the weight of the suction hole sealing material 15 sharply raises the temperature of a part of the glass plate 1A. Thus, the glass plate 1A of which temperature has risen is subjected to a high-temperature thermal shock in the suction hole 4 to be broken in some cases. Even when the glass plate 1A is not thermally broken when heated by the suction hole sealing material 15, cracks are sometimes generated around the suction hole 4 in heating due to a thermal expansion coefficient difference between the suction hole sealing material 15 and the glass plate 1A, which also poses a possibility of causing the thermal breakage in the subsequent temperature change. Therefore, the upper limit weight (Wmax) of the suction hole sealing material 15 is preferably 5.00 g or less. The weight W of the suction hole sealing material 15 is more preferably 0.50 g or more and 4.00 g or less and still more preferably 1.00 g or more and 3.00 g or less from the viewpoints of suppressing the temperature rise of the glass plate 1A and suppressing the cost.

The suction hole sealing material 15 is charged into the suction hole 4 using, for example, the sealing device 50 illustrated in FIGS. 4 and 5. When the suction hole sealing material 15 is charged, the oxide film 150 remains in the sealing device 50 and the remaining amount of the oxide film 150 is not constant. More specifically, the weight of the suction hole sealing material 15 set in the sealing device 50 is not the same as that of the suction hole sealing material 15 actually charged into the suction hole 4, e.g., when 4.00 g of the suction hole sealing material 15 is charged into the suction hole 4, the suction hole sealing material 15 with a weight of more than 4.00 g needs to be set in the sealing device 50. Therefore, it is preferable for the sealing device 50 to be able to control the weight of the suction hole sealing material 15 actually charged into the suction hole 4.

[Second embodiment]

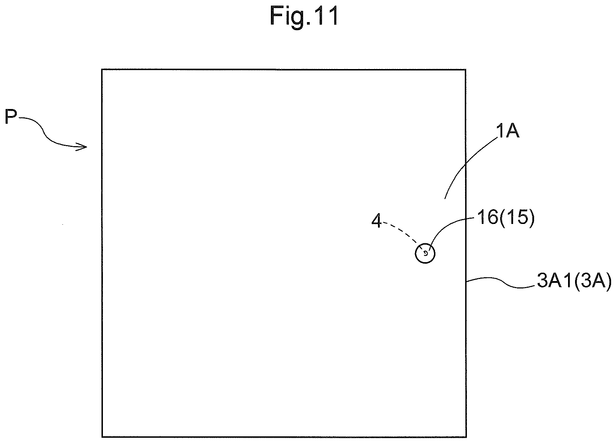

In this embodiment, the suction hole 4 is arranged in the vicinity of the center along one side 3A1 (end surface) of one of the pair of glass plates 1A, 1B formed in a rectangular shape as illustrated in FIG. 11. Also when the suction hole 4 is arranged at that position, the suction hole 4 can be made less visible in the glass panel P. Further, due to the fact that the suction hole sealing material 15 charged into the suction hole 4 is arranged close to only the one side 3A1 of the glass plate 1A, a region of the peripheral edge sealing material 11 of which temperature rises by the heat of the suction hole sealing material 15 can be reduced. This can suppress the decrease in the adhesion strength of the peripheral edge sealing material 11 in the glass plate 1A formed with the suction hole 4.

[Other embodiments]

(1) The above-described embodiment describes the example in which the suction hole sealing material 15 is non-contact with the plate surface of the glass plate 1B which is the other one of the pair of glass plates 1A, 1B, but a configuration may be acceptable in which the suction hole sealing material 15 contacts the plate surface of the glass plate 1B. Due to the fact that the suction hole sealing material 15 contacts the glass plate 1B not having the suction hole 4, the suction hole sealing material 15 is arranged over the glass plates 1A, 1B. Thus, the sealing state of the suction hole 4 can be firmly held by the suction hole sealing material 15.

(2) The above-described embodiment describes the example in which the suction hole sealing material 15 is charged into the suction hole 4 by piercing the surface of the suction hole sealing material 15 by the sharp tip member 70 in the sealing device 50, but the sealing device 50 may also be configured to charge the suction hole sealing material 15 into the suction hole 4 by, for example, rotating a vessel (not illustrated) on which the suction hole sealing material 15 is placed.

(3) The glass panel P of the above-described embodiment is usable for, in addition to buildings, showcase displays of freezers, refrigerators, and freezing refrigerators. In a conventional showcase display, the suction hole 4 is not close to the edge of the display, and therefore it was necessary to enlarge the outer shape of the glass plate and hide the entire one side of the glass plate including a sealed part of the suction hole 4 with a frame body. However, the glass panel P of the above-described embodiment can reduce a region of the frame body in the showcase due to the fact that the sealed part of the suction hole 4 is close to the edge of the showcase display, and therefore enhance the appearance (attractiveness) of the display.

INDUSTRIAL APPLICABILITY

The present invention is widely usable for the depressurized multilayered glass panel.

Description of Reference Numerals

1A    first glass plate
1B    second glass plate
2    spacer (space holding member)
3    peripheral edge
3A    edge
3A1    one side
4    suction hole
11    peripheral edge sealing material

14      groove part
15      suction hole sealing material
16      protrusion portion
50      sealing device
Dg      protrusion portion thickness
Dw      protrusion portion diameter
V       gap
V1      peripheral edge portion of gap

**Claims**

1.  A depressurized multilayered glass panel comprising:

    a pair of opposing glass plates;
    a plurality of space holding members arranged in a gap formed between the pair of glass plates;
    a peripheral edge sealing material configured to seal the gap of a peripheral edge of the pair of glass plates; and
    a suction hole sealing material configured to seal a suction hole penetrating through a front and a back in one of the pair of glass plates in a state where the gap is depressurized via the suction hole, wherein
    a center of the suction hole is provided at a position away from an edge of the pair of glass plates by 10 mm or more and 100 mm or less and an upper limit of a weight of the suction hole sealing material is Wmax calculated according to Equation below,

    [Math. 1]

    $$\mathrm{Wmax = K \times In(A/B) \times H \times C \times D/(N \times \Delta T),}$$

    wherein
    Wmax (g) is an upper limit weight of the suction hole sealing material,
    K is a correction coefficient,
    A (mm) is a distance from the center of the suction hole to the edge of the glass plate,
    B (mm) is a radius of the suction hole,
    H (mm) is a height of the suction hole,
    C (W/mm·K) is thermal conductivity of the glass plate.
    D (°C) is a temperature difference permissible between an inner diameter side of the suction hole and the edge of the glass plate when the suction hole sealing material is charged into the suction hole,
    N (J/g·K) is specific heat of the suction hole sealing material, and
    $\Delta T$ (°C) is a temperature difference between the suction hole sealing material and the peripheral edge sealing material when the suction hole sealing material is charged into the suction hole.

2.  The depressurized multilayered glass panel according to claim 1, wherein
    the suction hole sealing material has a weight of 0.05 g or more and 5.00 g or less.

3.  The depressurized multilayered glass panel according to claim 1 or 2, wherein
    the suction hole sealing material has a width in a plate surface direction of the pair of glass plates of 5 mm or more and 25 mm or less.

4.  The depressurized multilayered glass panel according to any one of claims 1 to 3, wherein
    the peripheral edge sealing material has the width in the plate surface direction of the pair of glass plates of 3 mm or more and 12 mm or less.

5.  The depressurized multilayered glass panel according to any one of claims 1 to 4, wherein
    the peripheral edge sealing material has a melting point of 200°C or more.

6.  The depressurized multilayered glass panel according to any one of claims 1 to 5, wherein

    the pair of glass plates is formed in a rectangular shape, and
    the suction hole is arranged in a corner portion close to two sides of the one of the pair of glass plates.

**7.** The depressurized multilayered glass panel according to any one of claims 1 to 6, wherein

the pair of glass plates is formed in a rectangular shape, and
the suction hole is arranged in a vicinity of a center along one side of the one of the pair of glass plates.

**8.** The depressurized multilayered glass panel according to any one of claims 1 to 7, wherein
the suction hole sealing material is in contact with a plate surface of another one of the pair of glass plates.

Fig.1

## Fig.2

## Fig.3

MANUFACTURING PROCESSING

PREPARE PLATE GLASS —— S31

BORE SUCTION HOLE —— S32

CLEAN PLATE GLASS —— S33

PAIRING —— S34

SEAL PERIPHERAL EDGE —— S35

EVACUATE —— S36

SEAL SUCTION HOLE —— S37

END

## Fig.4

## Fig.5

# Fig.6

## Fig.7

## Fig.8

## Fig.9

TEMPERATURE RISE QUANTITY (°C)

● TEST SAMPLE 1
○ TEST SAMPLE 2
△ TEST SAMPLE 3
▲ TEST SAMPLE 4

L1, L2, L3

EDGE-SUCTION HOLE DISTANCE (mm)

## Fig.10

WEIGHT OF SUCTION HOLE SEALING MATERIAL (g)

W

$y = 11.881\ln(x) - 26.212$

L1, L2, L3, F1, F2

EDGE-SUCTION HOLE DISTANCE (mm)

Fig.11

P

1A

4

16(15)

3A1(3A)

## INTERNATIONAL SEARCH REPORT

| International application No. |
| --- |
| **PCT/JP2022/004212** |

**A. CLASSIFICATION OF SUBJECT MATTER**

*C03C 27/06*(2006.01)i; *E06B 3/677*(2006.01)i
FI: C03C27/06 101D; E06B3/677

According to International Patent Classification (IPC) or to both national classification and IPC

**B. FIELDS SEARCHED**

Minimum documentation searched (classification system followed by classification symbols)

C03C27/06; E06B3/667; E06B3/677

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/093323 A1 (NIPPON SHEET GLASS CO., LTD.) 16 May 2019 (2019-05-16) entire text, all drawings | 1-8 |
| A | JP 2001-180985 A (NIPPON SHEET GLASS CO., LTD.) 03 July 2001 (2001-07-03) entire text, all drawings | 1-8 |
| A | JP 2002-012455 A (CENTRAL GLASS CO., LTD.) 15 January 2002 (2002-01-15) entire text, all drawings | 1-8 |
| A | WO 2019/093319 A1 (NIPPON SHEET GLASS CO., LTD.) 16 May 2019 (2019-05-16) entire text, all drawings | 1-8 |
| A | WO 2019/093320 A1 (NIPPON SHEET GLASS CO., LTD.) 16 May 2019 (2019-05-16) entire text, all drawings | 1-8 |
| A | JP 2018-188341 A (HITACHI, LTD.) 29 November 2018 (2018-11-29) entire text, all drawings | 1-8 |
| A | JP 2015-526609 A (GUARDIAN INDUSTRIES CORP.) 10 September 2015 (2015-09-10) entire text, all drawings | 1-8 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/004212**

C.      DOCUMENTS CONSIDERED TO BE RELEVANT

| Category* | Citation of document, with indication, where appropriate, of the relevant passages | Relevant to claim No. |
|---|---|---|
| A | WO 2013/132869 A1 (PANASONIC INTELLECTUAL PROPERTY MANAGEMENT CO., LTD.) 12 September 2013 (2013-09-12)<br>entire text, all drawings | 1-8 |

Form PCT/ISA/210 (second sheet) (January 2015)

## INTERNATIONAL SEARCH REPORT
### Information on patent family members

| International application No. |
|---|
| **PCT/JP2022/004212** |

| Patent document cited in search report | | | Publication date (day/month/year) | Patent family member(s) | | | Publication date (day/month/year) |
|---|---|---|---|---|---|---|---|
| WO | 2019/093323 | A1 | 16 May 2019 | (Family: none) | | | |
| JP | 2001-180985 | A | 03 July 2001 | US | 2002/0121111 | A1 | |
| | | | | whole document | | | |
| | | | | WO | 2001/047827 | A1 | |
| | | | | EP | 1160217 | A1 | |
| | | | | CA | 2363272 | A | |
| JP | 2002-012455 | A | 15 January 2002 | (Family: none) | | | |
| WO | 2019/093319 | A1 | 16 May 2019 | US | 2020/0340293 | A1 | |
| | | | | whole document | | | |
| | | | | EP | 3708552 | A1 | |
| | | | | CN | 111315702 | A | |
| | | | | KR | 10-2020-0073287 | A | |
| WO | 2019/093320 | A1 | 16 May 2019 | (Family: none) | | | |
| JP | 2018-188341 | A | 29 November 2018 | US | 2020/0189954 | A1 | |
| | | | | whole document | | | |
| | | | | WO | 2018/207435 | A1 | |
| | | | | CN | 110573471 | A | |
| JP | 2015-526609 | A | 10 September 2015 | US | 2013/0306222 | A1 | |
| | | | | whole document | | | |
| | | | | WO | 2013/173169 | A1 | |
| | | | | EP | 2852728 | A1 | |
| | | | | CN | 104471170 | A | |
| | | | | ES | 2627546 | T | |
| | | | | DK | 2852728 | T | |
| | | | | PL | 2852728 | T | |
| WO | 2013/132869 | A1 | 12 September 2013 | US | 2014/0335291 | A1 | |
| | | | | whole document | | | |
| | | | | WO | 2013/132866 | A1 | |
| | | | | CN | 104066697 | A | |

Form PCT/ISA/210 (patent family annex) (January 2015)

**EP 4 317 100 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019093323 A